# EUROPÄISCHE PATENTANMELDUNG

(11) **EP 4 036 553 A1**
(43) Veröffentlichungstag der Anmeldung: **03.08.2022**
(21) Anmeldenummer: 22152229.5
(22) Anmeldetag: 19.01.2022
(51) Int. Cl.: G01N 15/06, G01N 15/14, G01N 23/2251, H01J 37/28, G01N 1/22

(54) **VORRICHTUNG UND VERFAHREN ZUR ERFASSUNG EINER KONZENTRATION VON VORBESTIMMTEN PARTIKELN ANHAND IHRER MORPHOLOGISCHEN EIGENSCHAFTEN IN LUFT**

(30) Priorität: 28.01.2021 DE 102021101982
(71) Anmelder: ebm-papst neo GmbH & Co. KG, 74673 Mulfingen (DE)
(72) Erfinder: WYSTUP, Frederik, 74632 Neuenstein (DE); WYSTUP, Ralph, 74653 Künzelsau (DE)
(74) Vertreter: Staeger & Sperling Partnerschaftsgesellschaft mbB

(57) **Zusammenfassung**

Die Erfindung betrifft eine Vorrichtung (1) zur Erfassung einer Konzentration von vorbestimmten Partikeln, insbesondere Viren, in Luft (3), welche organische und/oder anorganische Aerosolpartikel umfasst, wobei die Vorrichtung (1) eine Bereitstellungseinheit (10) zum Binden der Aerosolpartikel als Partikel in einem Fluid (4), eine nach dem Funktionsprinzip eines Rasterelektronenmikroskops arbeitende Abbildungseinheit (20) zum Erzeugen einer vergrößerten Abbildung der in dem Fluid (4) enthaltenen Partikel, eine Bilderfassungseinheit (40) zum Erfassen und Übermitteln der Abbildung und eine Auswerteeinheit (50) zur Auswertung der in der Abbildung abgebildeten Partikel aufweist, wobei die Auswerteeinheit (50) ausgebildet ist, automatisch morphologische Eigenschaften der in der Abbildung abgebildeten Partikel zu erfassen, die erfassten morphologischen Eigenschaften mit morphologischen Eigenschaften der vorbestimmten Partikel zu vergleichen und durch den Vergleich einen Anteil und/oder Anzahl von vorbestimmten Partikeln in der Abbildung und die Konzentration der vorbestimmten Partikel in der Luft (3) zu bestimmen.

## Beschreibung

Die Erfindung betrifft eine Vorrichtung und ein zugehöriges Verfahren zur Erfassung einer Konzentration von vorbestimmten Partikeln und insbesondere Viren in Luft anhand ihrer morphologischen Eigenschaften und insbesondere ihrem Aussehen bzw. ihrer äußeren Erscheinung.

Es gibt eine Vielzahl von Krankheiten bzw. Krankheitserregern und insbesondere krankheitsauslösenden Viren, welche sich über die Luft und insbesondere über Aerosole verbreiten und in der Luft somit als Aerosolpartikel vorliegen. Daher ist es wünschenswert, solche Viren in der Luft detektieren sowie ihre Konzentration in der Luft und dadurch eine eventuelle Ansteckungsgefahr bestimmen zu können.

Im Stand der Technik sind zwar grundsätzlich sehr exakte Methoden zur Bestimmung der Konzentration von Viren in der Luft bekannt, diese basieren jedoch überwiegend auf Laborverfahren mit entsprechend langwierigen Analysen, so dass die bekannten Verfahren aufwendig, teuer und vor allem auch zeitintensiv sind. Die Vorrichtungen zur Durchführung der bekannten Methoden können daher nicht für eine kurzfristige Warnung vor Krankheitserregern genutzt werden, da die Analyseergebnisse meist schlicht zu spät vorliegen würden.

Zudem sind die bekannten Verfahren meist auf einen einzelnen ganz bestimmten Virus oder allgemein auf einen einzelnen bestimmten Krankheitserreger abgestimmt und oftmals nicht für andere Krankheitserreger anwendbar, so dass mit solchen Verfahren nicht die Konzentration bzw. das Vorhandensein verschiedenster Krankheitserreger in der Luft bestimmt werden kann.

Für eine erste Einschätzung, ob Krankheitserreger in der Luft vorhanden sind, sowie eine Einschätzung der Gefahr, welche von den potentiell vorhandenen Krankheitserregern ausgeht, ist es zunächst oftmals nicht zwingend nötig zu wissen, um welche Krankheitserreger oder Viren es sich genau handelt, sondern nur, dass solche Krankheitserreger mit einer gewissen Wahrscheinlichkeit und mit bzw. in einer gewissen Konzentration vorhanden sind. Hierfür schlagen beispielsweise die bisher unveröffentlichten deutschen Patentanmeldungen mit den Anmeldenummern 10 2020 120 199.0 und 10 2020 124 740.0 verschiedene Lösungen vor, durch welche das Vorhandensein von Partikeln mit einer bestimmten Partikelgröße ermittelt werden kann, bei welchen es sich mit überwiegender Wahrscheinlichkeit um bestimmte Krankheitserreger handelt.

Es ist zu beachten, dass ein Aerosol ein heterogenes Gemisch (Dispersion) aus festen und/oder flüssigen Schwebeteilchen in einem Gas, z.B. Luft ist. Die Schwebeteilchen werden Aerosolpartikel genannt, wobei solche Aerosolpartikel beispielsweise Staub, Pollen, Sporen, Bakterien oder Viren sein können, so dass eine einfache Messung der Aerosolpartikel und somit eine Abschätzung, ob Krankheitserreger vorhanden sind, nicht ohne Weiteres möglich ist.

Insbesondere bei einer Ermittlung der Konzentration von Partikeln in der Luft anhand der Größe der Partikel kann es daher dazu kommen, dass Partikel in die Bestimmung der Konzentration mit einbezogen werden, welche zufällig eine ähnliche Größe aufweisen und welche nicht dem gesuchten Krankheitserreger entsprechen, so dass die ermittelte Konzentration fehlerhaft ist.

Der Erfindung liegt deshalb die Aufgabe zugrunde, die vorgenannten Nachteile zu überwinden und eine Vorrichtung sowie ein zugehöriges Verfahren bereitzustellen, durch welche die Konzentration bestimmter Partikel und insbesondere bestimmter Viren in der Luft schnell und mit hoher Genauigkeit bestimmbar ist.

Diese Aufgabe wird durch die Merkmalskombination gemäß Patentanspruch 1 gelöst.

Erfindungsgemäß wird daher eine Vorrichtung zur Erfassung einer Konzentration von vorbestimmten Partikeln, insbesondere Viren, in Luft vorgeschlagen. Dabei umfasst die Luft organische und/oder anorganische Aerosolpartikel. Die Vorrichtung weist eine Bereitstellungseinheit, eine Abbildungseinheit, eine Bilderfassungseinheit sowie eine Auswerteeinheit auf. Die Bereitstellungseinheit ist ausgebildet, die in der Luft enthaltenen Aerosolpartikel in einem Fluid zu binden, so dass das Fluid die zuvor in der Luft enthaltenen Aerosolpartikel als Partikel enthält. Bei dem Fluid handelt es sich vorzugsweise um eine Flüssigkeit, wobei das Fluid auch ein Gasgemisch sein kann. Weiter ist vorgesehen, dass die Bereitstellungseinheit ausgebildet ist, einem stetigen oder gleichmäßig getakteten Fluidstrom entlang eines vorbestimmten Strömungspfades bereitzustellen, wobei der Fluidstrom, sowohl bei einer stetigen als auch getakteten Bereitstellung, kontinuierlich entlang dem Strömungspfad förderbar ist. Vorzugsweise ist die Bereitstellungseinheit bezüglich des Strömungspfades strömungstechnisch mit der Abbildungseinheit verbunden, so dass das Fluid bzw. die Flüssigkeit entlang des Strömungspfades von der Bereitstellungseinheit in sowie durch die Abbildungseinheit fließen kann. Die Abbildungseinheit weist einen Probenkanal mit einem Innenraum auf, welcher stetig oder getaktet von dem Fluid bzw. dem Fluidstrom durchströmbar ist und den vorbestimmten Strömungspfad innerhalb der Abbildungseinheit bestimmt. Der Probenkanal kann hierbei auch als Messkammer bezeichnet werden. Die Abbildungseinheit ist ausgebildet, die Partikel in dem Fluid in dem Probenkanal mit einem Elektronenstrahl (Primärelektronenstrahl) gerastert abzutasten, durch Interaktion des Elektronenstrahls (Primärelektronenstrahls) mit den Partikeln entstehende Elektronen (Sekundärelektronen) zu erfassen und durch die erfassten Elektronen (Sekundärelektronen) eine vergrößerte Abbildung der Partikel zu erzeugen, welche in dem den Probenkanal durchströmenden Fluid enthalten sind. Dabei kann die Abbildungseinheit als Rasterelektronenmikroskop ausgebildet sein bzw. gemäß dem Funktionsprinzip eines solchen funktionieren. Ferner kann die Abbildungseinheit auch als ein atmosphärisches Rasterelektronenmikroskop ausgebildet sein. Sowohl bei einer stetigen als auch bei einer getakteten Förderung befindet sich jeweils ein die Partikel umfassendes Fluid in der Abbildungseinheit, so dass durch die Vergrößerung der Partikel eine "In-situ-Messung" bzw. "In-situ-Analyse", durchgeführt werden kann, bei welchem sich also die Probe, welche durch das den Probenkanal strömende Fluid gebildet wird, fortlaufend (getaktet oder stetig) ändern kann. Insbesondere ist es also nicht nötig, die Probe, einen Probenträger oder sonstige Bestandteile der Vorrichtung von Hand auszutauschen oder anzupassen. Um eine schnelle und automatische Analyse bzw. Auswertung der durch die Abbildungseinheit erhaltenen Abbildungen zu ermöglichen, ist die Bilderfassungseinheit ausgebildet, die Abbildung insbesondere bildtechnisch zu erfassen und die Abbildung in ihrer erfassten Form bzw. digital an die Auswerteeinheit zu übermitteln. Entsprechend ist die Auswerteeinheit ausgebildet, automatisch morphologische Eigenschaften der in der Abbildung abgebildeten Partikel zu erfassen, die erfassten morphologischen Eigenschaften mit morphologischen Eigenschaften der vorbestimmten Partikel zu vergleichen und durch den Vergleich einen Anteil und/oder eine Anzahl von vorbestimmten Partikeln in der Abbildung und die Konzentration der vorbestimmten Partikel in der Luft zu bestimmen. Als morphologische Eigenschaften wird insbesondere das Aussehen der Partikel bzw. der Viren verstanden, so dass die vorbestimmten Partikel von anderen Partikeln anhand ihres Äußeren unterscheidbar sind bzw. unterschieden werden. Als Konzentration kann beispielsweise die Anzahl der vorbestimmten Partikel pro vorbestimmten Luftvolumen, also beispielsweise pro Kubikmeter angegeben werden.

Anhand der Konzentration der vorbestimmten Partikel (Viren) in der Probe bzw. in dem Fluid und der daraus bestimmten Konzentration der vorbestimmten Partikel (Viren) in der Luft, aus welcher die Probe gewonnen wurde, kann durch die Auswerteeinheit zudem bestimmt werden, ob grundsätzlich bestimmte Partikel (Viren) vorhanden sind, wie hoch eine Ansteckungsgefahr ist und ob die Ansteckungsgefahr einen vorbestimmten Schwellwert überschreitet.

Neben der Konzentration der vorbestimmten Partikel können auch Konzentrationen anderer Partikel erfasst werden. Beispielsweise können auch mehrere vorbestimmte Partikel vorgesehen sein, bei welchem ein erster vorbestimmter Partikel beispielsweise einem ersten Virus oder ersten Krankheitserreger und ein zweiter vorbestimmter Partikel beispielsweise einem zweiten Virus oder zweiten Krankheitserreger entspricht, so dass mittels der Auswerteeinheit ermittelt werden kann, welche Konzentrationen des ersten vorbestimmten Partikels und des zweiten vorbestimmten Partikels vorliegen. Hierfür sind dann entsprechend die morphologischen Eigenschaften beider Partikel bzw. bei mehreren vorbestimmten Partikeln aller vorbestimmten Partikel vorbekannt und in der Auswerteeinheit hinterlegt. Neben Krankheitserregern oder dergleichen kann durch die Auswerteeinheit auch beispielsweise die Konzentration von Staub in der Luft ermittelt werden, da es sich bei Staub ebenfalls lediglich um Partikel in der Luft handelt.

Darauf basierend kann zudem ein Alarm ausgelöst oder ein Signal an signaltechnisch verbundene Systeme übermittelt werden, durch welchem bzw. durch welches eine Konzentration übermittelt und falls erforderlich vor einer Ansteckungsgefahr gewarnt werden soll.

Wie einleitend beschrieben, sind zwar grundsätzlich Verfahren und zugehörige Vorrichtungen bekannt, durch welche Viren bzw. Partikel in einer aus Luft entnommenen Probe feststellbar sind, diese sind jedoch meist nur unter Laborbedingungen und durch Fachpersonal durchführbar und nicht für eine fortlaufende Kontrolle und Überprüfung der Luft, insbesondere einer Raumluft, geeignet. Daher ist der grundlegende erfinderische Gedanke durch die Vorrichtung eine Möglichkeit bereitzustellen, mit welcher ein andauernder oder andauernder getakteter Probenstrom (Fluidstrom) fortlaufend analysiert werden kann, um die Konzentration der Viren (Partikel) in der (Raum-) Luft zu erfassen und zumindest anzuzeigen.

Eingangsseitig der Bereitstellungseinheit kann die Luft mit einem vorbestimmten Volumenstrom beispielsweise durch eine Saugvorrichtung und insbesondere einen Ventilator bzw. ein Gebläse angesaugt werden.

Um auf die Konzentration der vorbestimmten Partikel in der Luft rückschließen zu können, ist zudem vorzugsweise vorgesehen, dass die Bereitstellungseinheit ausgebildet ist, die in einem vorbestimmten Volumen der Luft enthaltenen Aerosolpartikel in einem vorbestimmten Volumen dem Fluid zu binden, so dass aus dem Anteil von vorbestimmten Partikeln in dem vorbestimmten Volumen des Fluides die Konzentration der vorbestimmten Partikel in dem vorbestimmten Volumen Luft bestimmbar ist. Es gilt also, dass vorzugsweise in einem definierten Luftvolumen enthaltende vorbestimmte Partikel nach dem Binden in dem Fluid in einem definierten und bekannten Fluidvolumen vorhanden sind.

Die vorbestimmten Partikel können jedoch in sehr niedriger Konzentration in dem Fluid vorliegen, so dass die Lösung aus Fluid und Partikel sehr "dünn" sein kann. Um die Konzentration in einem bestimmten Bereich der Probe, also in einem bestimmten Bereich des durch den Probenkanal strömenden Fluides, zu erhöhen und die Auswertung dadurch zu vereinfachen, kann ferner vorgesehen sein, dass das Fluid bzw. die Flüssigkeit eine Elektrolytlösung ist, also ein Elektrolyt enthält und die Bereitstellungseinheit und/oder die Abbildungseinheit eine ein elektrisches Feld erzeugende Isotachophorese-Vorrichtung aufweist. Die Isotachophorese-Vorrichtung ist ausgebildet, die in der Elektrolytlösung gebundenen Partikel durch ihre unterschiedliche lonenbeweglichkeiten abschnittsweise voneinander zu trennen, so dass das durch den Probenkanal strömende Fluid abschnittsweise Bereiche aufweist, in welchen Partikel mit gleicher Ionenbeweglichkeit konzentriert sind. Somit liegt in der Probe ein Bereich vor, in welchem die vorbestimmten Partikel in einer höheren Konzentration vorhanden sind, als in den umliegenden Bereichen des Fluides, und in welchem im Wesentlichen alle vorbestimmten Partikel der Probe vorhanden sind, da diese eine identische Ionenbeweglichkeit aufweisen. Vor und nach diesem Bereich existieren entsprechend weitere Bereiche, in welchen andere in der Probe enthaltenen Partikel mit anderen lonenbeweglichkeiten in erhöhter Konzentration vorliegen. Durch die Abbildungseinheit kann gezielt der Bereich der Probe mit der erhöhten Konzentration der vorbestimmten Partikel vergrößert oder die im Wesentlichen gesamte Probe vergrößert werden. Die Isotachophorese-Vorrichtung kann hierfür zudem zwei Spannungsklemmen aufweisen, von welchen eine erste Klemme strömungstechnisch eingangsseitig der Abbildungseinheit und eine zweite Klemme strömungstechnisch ausgangsseitig der Abbildungseinheit angeordnet ist, durch welche das Fluid innerhalb des Probenkanals mit Spannung bzw. mit einem elektrischen Feld beaufschlagbar ist.

Um die Fluidströmung von der Bereitstellungseinheit durch den Probenkanal antreiben zu können, ist bei einer weiteren Ausführungsvariante vorgesehen, dass die Vorrichtung ferner eine Pumpe umfasst, welche ausgebildet ist, den Fluidstrom entlang des Strömungspfades anzutreiben und die Flüssigkeit bzw. das Fluid von der Bereitstellungseinheit mit einem vorzugsweise stetigen Volumenstrom oder in einem kontinuierlichem Takt getaktet durch die Abbildungseinheit hindurch zu pumpen bzw. zu fördern.

Zur Verbesserung der Sichtbarkeit der vorbestimmten Partikel bzw. aller Partikel in der Probe bzw. dem den Probenkanal durchströmenden Fluid ist zudem vorzugsweise vorgesehen, dass die Bereitstellungseinheit ausgebildet ist, dem Fluid ein Kontrastmittel beizumischen, durch welches insbesondere eine Negativkontrastierung realisierbar ist, so dass die Partikel bzw. die Form und äußere Erscheinung der Partikel in der durch die Abbildungseinheit erzeugten Abbildung besser sichtbar bzw. erkennbar sind. Bei dem Kontrastmittel kann es sich insbesondere um Phosphorwolframsäure handeln.

Weiter vereinfacht werden kann die Analyse bzw. Auswertung der Probe dadurch, dass in dieser weniger Partikel vorhanden sind, welche ohnehin nicht erfasst werden sollen, welche also von dem vorbestimmten Partikel abweichen. Hierfür kann vorteilhaft vorgesehen sein, dass die Bereitstellungseinheit einen eingangsseitigen Vorfilter aufweist, welcher ausgebildet ist, eingangsseitig in die Bereitstellungseinheit einströmende Luft zu filtern, so dass in der Luft enthaltene organische und/oder anorganische Aerosolpartikel, bei welchen es sich nicht um die vorbestimmten Partikel handelt, zumindest teilweise vor dem Binden der Aerosolpartikel in dem Fluid ausgefiltert werden, so dass diese entsprechend nicht in dem Fluid vorhanden sind. Da die wichtigsten Typen von vorbestimmten Partikeln in ihrem Durchmesser kleiner als 300 nm sind, kommt als Vorfilter insbesondere eine Größenfilterung in Frage, durch welche im Wesentlichen alle Partikel herausgefiltert werden, welche einen Durchmesser größer als 300 nm aufweisen.

Der Vorfilter kann zudem mehrere Filter aufweisen, welche zudem auf unterschiedlichen Filterprinzipien beruhen können. Beispielsweise kann der Vorfilter einen Größen-Filter aufweisen, durch welchen vorzugsweise im Wesentlichen alle Aerosolpartikel, die einen Durchmesser größer dem Durchmesser der vorbestimmten Partikel aufweisen, ausgefiltert werden, so dass gefilterte Luft erhalten wird, welche entsprechend vorzugsweise nur Aerosolpartikel mit einem Durchmesser gleich und/oder kleiner dem Durchmesser der vorbestimmten Partikel enthält. Daraus ergibt sich, dass die Flüssigkeit bzw. das Fluid beim Binden der in der Luft enthaltenen Aerosolpartikel in der Flüssigkeit bzw. dem Fluid die zuvor in der gefilterten Luft enthaltenen Aerosolpartikel mit einem Durchmesser gleich oder kleiner dem Durchmesser des vorbestimmten Partikels als Partikel enthält.

Durch das Leiten der Luft in den Größen-Filter ergibt sich anschließend eine genauere Ermittlung der Konzentration, da in dem Fluid weniger "störende" Partikel vorhanden sind, durch welche die Messergebnisse verfälscht werden können. Ein solcher Größen-Filter kann zudem auch aus mehreren hintereinander angeordneten Filtern bestehen, so dass der Größen-Filter im Wesentlichen eine Filter-Anordnung sein kann, durch welche sukzessive Partikel mit einem Durchmesser größer dem Durchmesser der vorbestimmten Partikel gefiltert werden können, bevor die verbleibenden Partikel in dem Fluid gebunden werden.

Da in der Luft geladene und/oder ungeladene Partikel vorhanden sind, deren Konzentration abhängig von dem zu detektierenden Krankheitserreger (vorbestimmter Partikel bzw. Virus) vorzugsweise nicht ermittelt werden soll, sieht eine weitere vorteilhafte Variante vor, dass der Vorfilter einen Ladungs-Filter aufweist, durch welchen Aerosolpartikel, die eine positive Ladung aufweisen, und/oder Aerosolpartikel, die eine negative Ladung aufweisen, und/oder Aerosolpartikel, die ungeladen sind, aus der Luft gefiltert werden, so dass gefilterte Luft erhalten wird, welche vorzugsweise entsprechend nur Aerosolpartikel enthält, welche eine vorbestimmte Ladung aufweisen, die einer durch Ladung der vorbestimmten Partikel entspricht. Hierbei kann unter Ladung eine positive Ladung, eine negative Ladung sowie keine Ladung verstanden werden. Daraus folgt, dass das Fluid beim Binden der in der Luft enthaltenen Aerosolpartikel in dem Fluid im Wesentlichen nur die zuvor in der gefilterten Luft enthaltenen Aerosolpartikel mit einer vorbestimmten Ladung als Partikel enthält, was beispielsweise durch ein lineares Massenspektrometer mit Quadrupel-Elektroden realisiert werden kann.

Zur Realisierung eines solchen Ladungs-Filters kann beispielsweise ein elektrisches Feld verwendet werden, durch welches die geladenen (Aerosol-) Partikel aus ihrer Bewegungsbahn ausgelenkt und somit aus dem Luftstrom entfernt werden. Ein derart realisierter Ladungs-Filter kann zudem mit einem oder mehreren Größen-Filtern kombiniert werden.

Der Ladungs-Filter kann auch als elektrostatische Filtersäule bzw. Elektrofilter ausgeführt sein.

Darüber hinaus kann der Vorfilter bzw. ein Filter des Vorfilters als ein "Impaction"-Filter ausgebildet sein, bei welchen die eingangsseitig einströmende Luft bzw. allgemein der Luftstrom umgelenkt wird, so dass zu entfernende Partikel, welche größer sind als die vorbestimmten Partikel, durch ihre größere Masse und dem den Partikeln innewohnenden Moment aus dem Luftstrom gerissen werden.

Weiter kann vorgesehen sein, dass der Vorfilter ein inhomogenes elektrisches Feld aufweist bzw. bereitstellt, durch welches polarisierbare Aerosolpartikel polarisiert werden. Ferner ist das inhomogene elektrische Feld bzw. eine dieses Feld erzeugende Vorrichtung ausgebildet, die polarisierten Aerosolpartikel durch den inhomogenen Verlauf des elektrischen Feldes auf eine Sammelvorrichtung zu lenken bzw. aus ihrer Bewegungsbahn auszulenken und an der Sammelvorrichtung zu sammeln. Die polarisierten Aerosolpartikel sammeln sich dementsprechend auf bzw. an der Sammelvorrichtung und werden an dieser oder ausgehend von dieser beim Binden der in der Luft enthaltenen Aerosolpartikel in dem Fluid gebunden.

Beispielsweise kann die Sammelvorrichtung der später erläuterte Kondensator der Bereitstellungseinheit und entsprechend temperiert sein, so dass die polarisierten Aerosolpartikel an der Sammelvorrichtung kondensieren. Das Leiten der Luft durch das inhomogene elektrische Feld, welches entsprechend im Wesentlichen ein Filtern und Sammeln der polarisierbaren Partikel aus der Luft darstellt, kann mit einem vorgeschaltetem Ladungs-Filter und einem oder mehreren vorgeschaltetem Größen-Filter kombiniert werden.

Sind die vorbestimmten Partikel nicht polarisierbar, weisen aber eine vorbekannte Ladung auf, kann die Sammelvorrichtung auch als entsprechend entgegengesetzt geladene Fläche ausgeführt sein, welche die vorbestimmten Partikel und der vorbekannten Ladung anzieht. Solche entsprechend entgegengesetzt geladenen und als Sammelvorrichtung vorgesehenen Flächen können ebenfalls beheizt sein.

Zum Binden der Partikel in dem Fluid ist vorzugsweise vorgesehen, dass die Bereitstellungseinheit einen Kondensator zum Binden der in der Luft enthaltenen Aerosolpartikel in dem Fluid bzw. der Flüssigkeit durch Kondensation aufweist. Die Luft mit den darin enthaltenen Partikeln kann also an dem Kondensator zu einem Kondensat (Kondenswasser) kondensieren und von diesem abgeführt werden. Hierfür kann der Kondensator zu einer Bildung von Kondenswasser führend temperiert und beispielsweise als Peltier-Element ausgeführt sein.

Vorzugsweise funktioniert die Abbildungseinheit nach dem Prinzip eines Rasterelektronenmikroskops, welches kurz als REM bezeichnet werden kann. Gemäß einer vorteilhaften Ausführungsform umfasst die als REM fungierende Abbildungseinheit ferner eine einen Primärelektronenstrahl erzeugende Primärelektronenquelle, eine Vielzahl den Primärelektronenstrahl lenkende und als für den Primärelektronenstrahl als Linse wirkende Magnete und eine Vakuumkammer aufweist, in welcher ein Vakuum herrscht und welche von dem Primärelektronenstrahl durchlaufen wird. Weiter weist die Abbildungseinheit zumindest eine Rastervorrichtung zur rasternden Ablenkung des Primärelektronenstrahls sowie einen Detektor zur Detektion von Sekundärelektronen auf. Zur Vergrößerung der in der Probe enthaltenen Partikel, durchläuft der Probenkanal vorzugsweise die Vakuumkammer oder grenzt an diese an, wobei der Probenkanal derart in oder an der Vakuumkammer angeordnet ist, dass der der Primärelektronenstrahl den Probenkanal und das den Probenkanal insbesondere kontinuierlich durchströmende Fluid trifft, so dass dabei Sekundärelektronen erzeugt werden. Obgleich in der Vakuumkammer ein Vakuum bzw. ein sehr niedriger Luftdruck herrscht, kann in dem Probenkanal Überdruck oder atmosphärischer Druck herrschen.

Werden die in der Luft enthaltenen Partikel in (herkömmlichen) Wasser oder einer anderen elektrisch leitfähigen Flüssigkeit gebunden, kann zu dem eine entsprechende Präparation der Probe entfallen, da diese bzw. das Fluid ohnehin bereits leitfähig sind.

Der Primärelektronenstrahl, welcher vorzugsweise einen Durchmesser zwischen ca. 1nm und 10 nm aufweist, kann entsprechend gerastert über einen vorbestimmten Rasterabschnitt an dem Probenkanal geführt werden, so dass der Primärelektronenstrahl die Probe abtastet, dabei die Sekundärelektronen erzeugt und die vergrößerte Abbildung entsprechend dem bekannten Funktionsprinzip eines REM zeilenweise aufgebaut wird.

Da ein REM verwendet wird, sollte der Probenkanal zumindest abschnittsweise für den durch das REM erzeugten Primärelektronenstrahl transparent bzw. nahezu vollständig durchlässig sein, so dass eine vorteilhafte Variante vorsieht, dass der Probenkanal zumindest abschnittsweise aus Siliziumnitrid, einer vorzugsweise dünnen Aluminiumfolie oder einem anderen für den Primärelektronenstrahl bzw. für die Elektronen des Primärelektronenstrahls und die Sekundärelektronen durchlässigen Material gebildet ist, wobei das Siliziumnitrid, die Aluminiumfolie oder das andere geeignete Material zugleich den Innenraum des Probenkanals gegenüber der Vakuumkammer druckdicht abdichtet.

Weiter kann der Probenkanal auf einer dem Primärelektronenstrahl zugewandten Seite einen Rasterabschnitt aufweist, über welchen der Primärelektronenstrahl gerastert durch die Rastervorrichtung gelenkt wird. Der Probenkanal ist hierbei in dem Rasterabschnitt und vorzugsweise über den gesamten Rasterabschnitt aus Siliziumnitrid, Aluminiumfolie oder einem anderen für den Primärelektronenstrahl und die Sekundärelektronen durchlässigen Material gebildet, welches zugleich den Innenraum des Probenkanals gegenüber der Vakuumkammer druckdicht abdichtet.

Dabei kann der Probenkanal auch mehrere fensterartige Abschnitte aus dem von dem Primärelektronenstrahl passierbaren Material aufweisen.

Darüber hinaus kann der Probenkanal aus einer, zwei oder mehr aneinander anliegenden und zwischen sich einen Kanal bildenden Membran(en) bestehen, wobei die an die Vakuumkammer angrenzende und/oder dem Primärelektronenstrahl zugewandte Membran für den Primärelektronenstrahl und die Sekundärelektronen passierbar und beispielsweise aus Siliziumnitrid oder einem anderen dafür geeigneten Material ausgebildet ist.

Weiter ist der Probenkanal bzw. der von dem Primärelektronenstrahl passierbare Abschnitt des Probenkanals vorzugsweise bezüglich seiner Dicke so gewählt, dass eine möglichst genaue und scharfe Abbildung bzw. Vergrößerung durch das REM erzeugt werden kann.

Gegenüber einem herkömmlichen REM kann das vorliegend vorgeschlagene REM vorteilhaft dahingehend ausgestaltet sein, dass es speziell für die vorzugsweise gleichbleibende Vergrößerung einer ständig bzw. getaktet wechselnden aber gleichartigen Probe an einer vorbekannten und unveränderlichen Position ausgebildet ist, für deren Wechsel jedoch kein Austausch eines Probenträgers oder dergleichen notwendig ist. Somit muss das gemäß der vorteilhaften Variante vorgeschlagene REM nicht wesentlich fokussier- oder allgemein einstellbar ausgebildet sein und auch keinen Wechsel eines Objektträgers für die Proben berücksichtigen bzw. ermöglichen. Entsprechend ist weiter vorzugsweise vorgesehen, dass die Magnete als Permanentmagnete ausgebildet sind oder als Elektromagnete ausgebildet und mit einer konstanten bzw. im Wesentlichen unveränderlichen Spannung versorgt sind, so dass der Primärelektronenstrahl von den Magneten in einer einzigen vorbestimmten Weise auf das den Probenkanal durchströmende Fluid fokussiert ist und insbesondere durch die Rastervorrichtung rasternd über den Rasterabschnitt des Probenkanals gelenkt werden kann. Alternativ können die Magneten auch in Form von Spulen vorgesehen sein. Ferner sind diese insbesondere als Ringmagnete um die Vakuumkammer angeordnet. Sind Elektromagnete mit einer konstanten Spannung vorgesehen, kann auf eine aufwändige Spannungsregelung und eine zugehörige Steuerung verzichtet werden. Zudem umfasst ein REM meist mehrere Magnete bzw. durch diese gebildete Magnetsysteme, so dass beispielsweise abhängig von dem benötigten Magnetfeld erste Magnete des REM als Permanentmagnete und zweite Magnete des REM als mit einer konstanten Spannung versorgte Elektromagnete ausgeführt sein können. Sofern das REM eine Apertur umfasst, kann auch diese unveränderlich bzw. fixiert ausgeführt sein. Auch die Elektronenquelle kann ausgebildet sein, einen unveränderlichen bzw. fest eingestellten Elektronenstrahl mit gleichbleibend vorbestimmten Eigenschaften zu erzeugen.

Wie beschrieben ist das vorgeschlagene REM vorzugsweise nicht wesentlich einstellbar. Es kann jedoch vorgesehen sein, dass das REM bzw. die einzelnen Komponenten des REM in einem eng eingegrenzten und vorbestimmten Bereich einstellbar sind, um einen Feinabgleich, eine Scharfstellung der erzeugten Abbildung und den Ausgleich von Alterungserscheinungen zu ermöglichen. Hierfür können beispielsweise die Magnete auswechselbar oder eine eventuell vorhandene Apertur sehr begrenzt einstellbar sein.

Zudem kann der Probenkanal dauerhaft und bezogen auf die Vakuumkammer insbesondere ortsfest mit der Vakuumkammer verbunden sein. Vorteilhaft ist zudem eine einteilige Ausführung von Vakuumkammer und Probenkanal miteinander, bei welcher diese untrennbar verbunden sind.

Weiter muss die Vakuumkammer des REM bei dieser speziellen Variante nicht dafür ausgelegt werden, immer wieder ein hohes Vakuum aufzubauen. Daher kann die Vakuumkammer vollständig druckdicht abgeschlossen und ferner ausgebildet sein, ein in ihr herrschendes Vakuum dauerhaft zu erhalten, so dass eine das Vakuum bestimmende Druckminderung nur einmalig z.B. bei der Herstellung bzw. Fabrikation der Vorrichtung oder der Vakuumdruckkammer durchgeführt werden muss und anschließend dauerhaft, also vorzugsweise über die gesamte Lebensdauer der Vorrichtung, erhalten bleibt.

Die Rastervorrichtung ist vorzugsweise zudem ausgebildet, den Primärelektronenstrahl elektrostatisch und/oder elektromagnetisch abzulenken und dadurch gerastert über den Probenkanal und insbesondere über den Rasterabschnitt des Probenkanals zu führen.

Zur Erfassung und insbesondere Digitalisierung der erzeugten Abbildung, ist die Bilderfassungseinheit vorzugsweise A/D-Wandler, welcher ausgebildet ist, eine analoge von Sekundärelektronen mittels des Detektors erfasste Abbildung in eine digitale Abbildung zu wandeln.

Alternativ und insbesondere dann, wenn die Sekundärelektronen in ein analoges Bild gewandelt werden sollen, kann die Bilderfassungseinheit auch ein CCD-Sensor oder eine Kamera sein. Die Kamera bzw. der CCD-Sensor ist ausgebildet, die von der Abbildungseinheit erzeugte analoge Abbildung zu erfassen und dadurch zu digitalisieren bzw. in eine digitale Abbildung zu wandeln.

Weiter kann die Bilderfassungseinheit auch als eine Einheit aus Szintillator und Photomultiplier ausgebildet sein, welche auch den Detektor des REM ersetzen und dadurch ein Bildsignal an die Auswerteeinheit liefern kann.

Vorteilhaft ist auch eine Variante der Vorrichtung, bei welcher die Bilderfassungseinheit und die Abbildungseinheit integral miteinander ausgebildet sind, so dass die Partikel in dem Probenkanal nach dem Prinzip des Rasterelektronenmikroskops vergrößert und die vergrößerte Abbildung nach dem Prinzip eines Ikonoskops, Orthikons oder Superorthikons erfasst wird. Vorzugsweise kann vorgesehen sein, dass zumindest Teile des Ikonoskops/Orthikons/Superorthikons den Detektor des REM ersetzen oder dass ein Glasfenster des Ikonoskops/Orthikons/Superorthikons durch den Probenkanal mit dem Rastabschnitt ersetzt wird.

Bei einer Variante der Vorrichtung, bei welcher das REM als Abbildungseinheit und ein Superorthikon als Bilderfassungseinheit integral miteinander ausgebildet sind bzw. das Superorthikon zugleich als REM fungiert, ist eine Auswerteeinheit für die Sekundärelektronen in der Vakuumkammer angeordnet, welche somit den Detektor des REM ersetzt. Anstelle eines Glasfensters mit einer lichtempfindlichen Schicht, wie sie bei herkömmlichen Superorthikonen üblich ist, tritt der Probenkanal bzw. der Rasterabschnitt des Probenkanals, welcher zumindest abschnittsweise aus dem für den Primärelektronenstrahl und die Sekundärelektronen durchdringbaren Material (z.B. Siliziumnitrid oder Aluminiumfolie) ausgebildet ist. Der Rasterabschnitt kann hierfür beispielsweise mehrere dünne Abschnitte ("Fenster") von ca. 10 µm x 10 µm mit einer Dicke von ca. 10-30 nm aufweisen. Das REM wird so ausgelegt, dass Auflösungen bei der Bildgebung von bis zu 10 nm oder mehr möglich sind. Dazu können weitere Elektroden und Spulen zur Fokussierung, rasternden Ablenkung oder Justage (Feineinstellung) des Primärelektronenstrahls hinzugefügt werden.

Ebenso kann das REM so ausgebildet sein, dass an seiner Primärelektronenquelle Anodenspannungen bis 120 kV oder mehr möglich sind.

Weiter kann die Bilderfassungseinheit das so erfasste Bild elektronisch bzw. signaltechnisch an die Auswerteeinheit übermitteln. Hierbei kann sowohl ein Standbild als auch ein Bewegtbild, wie ein fortlaufendes Videosignal, an die Auswerteeinheit übermittelt werden.

Zur Analyse bzw. Auswertung des übermittelten Bildes, weist die Auswerteeinheit gemäß einer vorteilhaften Ausgestaltung einen Datenspeicher auf, in welchem die morphologischen Eigenschaften und insbesondere ein Aussehen der vorbestimmten Partikel, beispielsweise durch einen Algorithmus, tabellarisch oder als Vergleichsbild, gespeichert sind. Zudem ist die Auswerteeinheit ausgebildet, durch Bildverarbeitung und Objekterkennung sowie beispielsweise durch neuronale Netzte bzw. eine künstliche Intelligenz zu ermitteln, wie viele der in der Abbildung abgebildeten Partikel morphologische Eigenschaften und insbesondere ein Aussehen entsprechend der morphologischen Eigenschaften und insbesondere dem Aussehen der vorbestimmten Partikel aufweisen und somit vorbestimmte Partikel sind. Wurde so die Anzahl der Partikel in der Probe ermittelt, bei welchen es sich um die vorbestimmten Partikel handelt, kann über die Anzahl deren Anteil bzw. deren Anzahl in der Probe bzw. in der Luft bestimmt werden.

Die Auswerteeinheit kann dabei auch durch eine Vielzahl von miteinander vernetzten Computern gebildet werden bzw. durch eine "Cloud"-Lösung realisiert sein. Entsprechend kann auch die von der Auswerteeinheit durchgeführte Auswertung bzw. Analyse in der "Cloud" stattfinden.

Gemäß einer weiteren vorteilhaften Weiterbildung, weist die Vorrichtung ferner eine Strahlungsquelle zur Zerstörung von Partikeln und insbesondere zur Zerstörung der vorbestimmten Partikel auf. Die Strahlungsquelle ist dabei auf den Probenkanal ausgerichtet, so dass die Partikel in dem Probenkanal zerstörbar sind. Bei der Strahlungsquelle kann es sich beispielsweise um eine Deuteriumlampe oder insbesondere bei Viren als vorbestimmte Partikel um eine UV-Lichtquelle handeln, durch welche ein die vorbestimmte Partikel fragmentierendes UV-Licht erzeugt wird. Dadurch lässt sich die Fragmentierung bzw. Zerstörung der vorbestimmten Partikel mittels des REM "live" bzw. in Echtzeit erfassen, so dass anhand der Auswertung durch die Auswerteeinheit von nacheinander erfassten Abbildungen zusätzlich auf das Vorhandensein von vorbestimmten Partikeln in der Probe geschlossen werden kann. Hierfür können die zeitlich nacheinander erfassten Abbildungen von der Auswerteeinheit verglichen und anhand der Anzahl der zerstörten bzw. fragmentierten Partikel auf die Anzahl der vorbestimmten Partikel in der Probe geschlossen werden. Der Vergleich eines ersten Bildes mit einem unzerstörten Partikel mit einem zweiten, später aufgenommenen Bild mit einem zerstörten Partikel und die sich daraus ergebende Auswertung, dass es sich bei dem Partikel um einen vorbestimmten Partikel gehandelt hat, wird hierbei ebenfalls als Erfassen und Auswerten morphologischer Eigenschaften des Partikels verstanden. Entsprechend ist durch die Auswertung der Zerstörbarkeit von Partikeln ein weiterer Freiheitsgrad bei der Bestimmung der Konzentration der vorbestimmten Partikel in der Luft gegeben, welcher einen Vergleich des Aussehens der Partikel in der Abbildung mit vorbekannten morphologischen Eigenschaften ersetzen oder ergänzen kann.

Wird eine solche Licht emittierende Strahlungsquelle verwendet, kann die Lichtfrequenz, Wellenlänge und/oder Lichtstärke der Strahlungsquelle einstellbar sein, so dass die Fragmentierung bzw. Zerstörung der vorbestimmten Partikel und/oder die Partikel, welche als vorbestimmte Partikel zerstört werden sollen, einstellbar sind.

Ein weiterer Aspekt der Erfindung betrifft ein Verfahren zur Erfassung einer Konzentration von vorbestimmten Partikeln, insbesondere Viren, in Luft, welche organische und/oder anorganische Aerosolpartikel umfasst, mit einer erfindungsgemäßen Vorrichtung. Dabei ist vorgesehen, dass die in der Luft enthaltenen Aerosolpartikel mit der Bereitstellungseinheit in einem Fluid gebunden werden, so dass das Fluid die zuvor in der Luft enthaltenen Aerosolpartikel als Partikel enthält, und dass anschließend ein stetiger oder gleichmäßig getakteter Fluidstrom entlang eines vorbestimmten Strömungspfades bereit gestellt wird. Anschließend wird mittels der Abbildungseinheit eine vergrößerte Abbildung der Partikel erzeugt, welche in dem den Probenkanal durchströmenden Fluid enthalten sind. Die so erzeugte Abbildung wird mit der Bilderfassungseinheit erfasst und an die Auswerteeinheit übermittelt. Die Auswerteeinheit erfasst automatisch morphologische Eigenschaften der in der Abbildung abgebildeten Partikel, wobei anschließend die erfassten morphologischen Eigenschaften mit morphologischen Eigenschaften der vorbestimmten Partikel verglichen werden. Durch den Vergleich werden ein Anteil von vorbestimmten Partikeln in der Abbildung und die Konzentration der vorbestimmten Partikel in der Luft bestimmt. Unter dem Erfassen der morphologischen Eigenschaften der Partikel und dem anschließenden Vergleich wird insbesondere auch ein Vergleich der durch die Abbildungseinheit erzeugten Abbildung bzw. den Abbildungen der darauf gezeigten Partikel mit Vergleichsbildern der vorbestimmten Partikel verstanden.

Zudem betrifft ein weiterer Aspekt der Erfindung ein System zur Ermittlung einer Bewegung und Konzentration von vorbestimmten Partikeln in einem Raum im Sinne eines Zimmers. Das System umfasst eine zentrale Auswerteeinheit und eine Vielzahl von erfindungsgemäßen Vorrichtungen. Die Vorrichtungen sind nach einem vorbestimmten Muster und insbesondere gemäß einem vorbestimmten Raster in dem Raum verteilt. Die zentrale Auswerteeinheit, welche auch die Auswerteeinheit der Vorrichtungen umfassen oder integral ausbilden kann, ist ausgebildet, aus den von den Vorrichtungen jeweils ermittelten Konzentrationen eine Konzentration der Partikel in dem Raum und/oder eine Verteilung der vorbestimmten Partikel in dem Raum und/oder eine Bewegung der vorbestimmten Partikel in dem Raum zu ermitteln und/oder vorherzusagen. Hierfür können die Konzentrationen auch über einen längeren Zeitraum ermittelt und beobachtet bzw. analysiert werden. Für die Bestimmung der Konzentrationen der Bewegungen und des zu erwartenden, also zukünftigen Verhaltens können auch insbesondere neuronale Netze, künstliche Intelligenz oder eine Extrapolation verwendet werden.

Als die Bewegung der vorbestimmten Partikel kann nicht nur die makroskopische Bewegung in einem Raum, sondern bei geeigneter Anordnung der Vorrichtungen eine brownsche Molekularbewegung der Partikel erfasst werden.

Neben einem Alarm, welcher bei einem Überschreiten der Konzentration über einen vorzugsweise vorbestimmten Grenzwert ausgelöst werden kann, kann zudem auch ein Alarm oder Signal erzeugt werden, wenn sich die vorbestimmten Partikel im Raum, also die Aerosolwolke in eine bestimmte Richtung oder zu einer bestimmten Position bewegt.

Vorzugsweise ist das System dabei derart stabil und autonom ausgebildet, dass das System lokal als Sensor fungieren kann.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

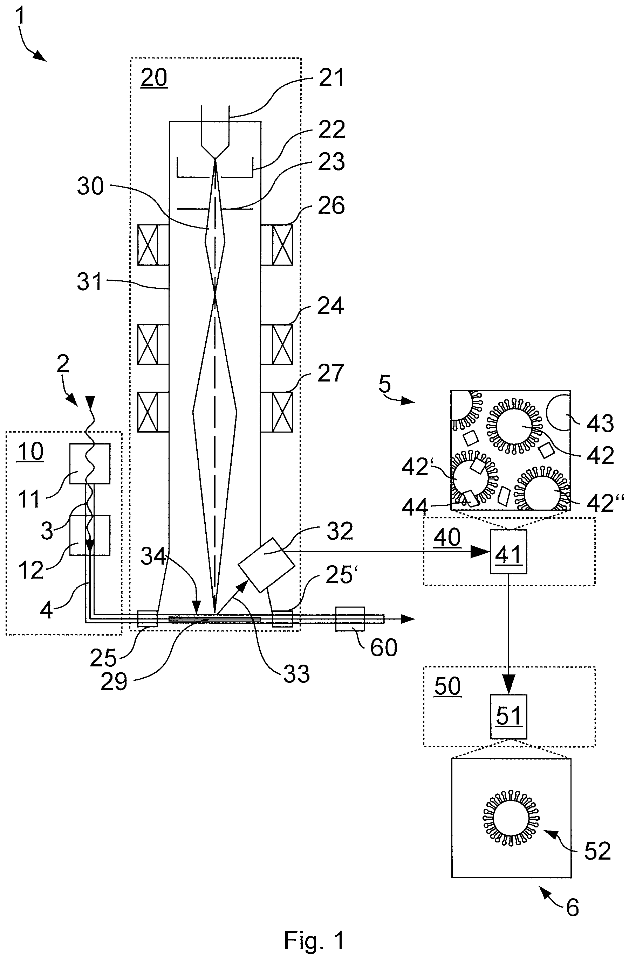

- Fig. 1: eine erste Variante der Vorrichtung;
- Fig. 2: eine zweite Variante der Vorrichtung.

Die Figuren sind beispielhaft schematisch. Gleiche Bezugszeichen in den Figuren weisen auf gleiche funktionale und/oder strukturelle Merkmale hin.

Das Grundprinzip der Vorrichtung 1 besteht darin, Luft 3 und beispielsweise Raumluft an einem Lufteinlass 2 anzusaugen bzw. aufzunehmen, die in der Luft 3 enthaltenen Partikel in der Bereitstellungseinheit 10 in einer Flüssigkeit 4 als Fluid zu binden und einen ständigen Flüssigkeits- bzw. Fluidstrom durch die Abbildungseinheit 20 bereitzustellen, der sowohl stetig als auch getaktet sein kann, so dass hierdurch eine "In-situ-Analyse" der in der Flüssigkeit 4 gebundenen Partikel ermöglicht wird, bei welcher sich also die zu analysierende Probe, bei welcher es sich um die Flüssigkeit 4 bzw. genauer die durch die Abbildungseinheit 20 strömende Flüssigkeit 4 handelt, ständig bzw. getaktet verändert. Zusammen mit der Flüssigkeit 4 wird also ein ständiger Strom von Partikeln durch das REM bzw. durch die Abbildungseinheit 20 bereitgestellt, durch welche die Partikel vergrößert abgebildet werden, so dass die in der Probe bzw. in der Flüssigkeit 4 enthaltenen Partikel anschließend analysiert werden können.

Vorliegend weist die Bereitstellungseinheit 10 einen Vorfilter 11 auf, durch welchen Partikel aus der Luft 3 gefiltert werden, bei welchen es sich bereits aufgrund ihrer Größe, Ladung oder anderer Faktoren nicht um die vorbestimmten Partikel handeln kann. Der Vorfilter 11 kann hierfür mehrere Filterstufen aufweisen und verschiedene Filterprinzipien anwenden.

Die durch den Vorfilter 11 gefilterte Luft 3 wird anschließend durch einen Kondensator 12 kondensiert, so dass sich ein Kondensat als Flüssigkeit 4 bildet, in welcher die zuvor in der gefilterten Luft 3 enthaltenen Partikel gebunden sind.

Das Kondensat bzw. die Flüssigkeit 4 wird anschließend entlang eines vorbestimmten Strömungspfades aus der Bereitstellungseinheit 10 in bzw. durch die Abbildungseinheit 20 gepumpt, wobei hierfür eine ausgangsseitig der Abbildungseinheit 20 angeordnete Pumpe 60 verwendet wird.

In der Flüssigkeit 4 sind die vorbestimmten Partikel sowie alle darin enthaltenen Partikel zunächst relativ gleichmäßig verteilt, so dass die gesuchten bzw. vorbestimmten Partikel, deren Konzentration in der Luft ermittelt werden soll, über einen Bereich der Flüssigkeit 4 gleichmäßig verteilt und schlecht bzw. aufwändig auffindbar sind. Zur Verbesserung und Vereinfachung der Analyse weist die Abbildungseinheit 20 eine Isotachophorese-Vorrichtung mit einer ersten Spannungsklemme 25 und einer zweiten Spannungsklemme 25' auf. Die erste Spannungsklemme 25 ist strömungstechnisch eingangsseitig der Abbildungseinheit 20 bzw. des Probenkanals 29 und die zweite Spannungsklemme 25' ist strömungstechnisch ausgangsseitig der Abbildungseinheit 20 bzw. des Probenkanals 29 angeordnet, wobei diese ein elektrisches Feld in dem Probenkanal 29 aufbauen, so dass sich in der den Probenkanal 29 durchströmenden Flüssigkeit 4 mehrere Bereiche ausbilden, welche jeweils Partikel mit gleicher bzw. annähernd gleicher Ionenbeweglichkeit aufweisen. In einem dieser Bereiche liegen somit im Wesentlichen alle Partikel mit einer Ionenbeweglichkeit gleich der lonenbeweglichkeit der vorbestimmten Partikel und mithin im Wesentlichen alle vorbestimmten Partikel vor, so dass es ausreichend ist, nur diesen Bereich mit der Abbildungseinheit 20 abzubilden, mit der Bilderfassungseinheit 40 zu erfassen oder mit der Auswerteeinheit 50 auszuwerten.

Die als REM realisierte Abbildungseinheit 20 muss nicht für verschiedene Messverfahren oder einen Austausch von Probenträgern oder dergleichen ausgebildet sein, so dass das REM auf die vorliegende Anwendung spezialisiert ist. Hierfür weist das REM eine vollständig und dauerhafte abgedichtete Vakuumkammer 31 auf, in welcher einmalig ein Vakuum (Hochvakuum) erzeugt wurde und dauerhaft erhalten bleibt. In die Vakuumkammer, welche auch als Messsäule bezeichnet werden kann, wird durch eine Primärelektronenquelle 21 ein Primärelektronenstrahl 30 emittiert, welcher die Vakuumkammer 31 der Länge nach durchläuft. Der Primärelektronenstrahl 30 wird durch einen Wehneltzylinder 22 unveränderlich in seiner Strahlstärke eingestellt und durch eine fest eingestellte und nicht verstellbare Apertur 23 sowie mehrere Magneten 26, 27 auf den Probenkanal 29 gelenkt bzw. fokussiert. Zusätzlich oder alternativ, kann auch der Wehneltzylinder 22 mit einer festen unveränderlichen Spannung versorgt und somit eingestellt werden, wodurch die Intensität des Primärelektronenstrahls 30 fest eingestellt bzw. der Primärelektronenstrahl 30 fokussiert wird. Um den Primärelektronenstrahl 30 gerastert über einen vorbestimmten Rastabschnitt 34 des Probenkanals 29 führen und dadurch eine vergrößerte Abbildung der in dem Probenkanal 29 angeordnete Probe erzeugen zu können, ist ferner eine Rastervorrichtung 24 vorgesehen, welche den Primärelektronenstrahl 30 gemäß einem vorbestimmten Muster ablenkt und die Probe somit gemäß dem vorbestimmten Raster abtastet.

Die durch den Probenkanal 29 fließende Flüssigkeit 4 wird von dem Primärelektronenstrahl 30 somit stets in einer einzigen vorbestimmten Weise getroffen, wodurch Sekundärelektronen 33 erzeugt werden, welche auf den Detektor 32 des REM treffen und dadurch eine Abbildung der in der Flüssigkeit 4 vorhandenen Partikel erzeugen.

Die durch den Detektor 32 aufgefangenen Sekundärelektronen 33 können in eine analoge Abbildung gewandelt werden, welche anschließend in eine digitale Abbildung gewandelt werden kann. Alternativ können die Sekundärelektronen 33 bzw. die durch sie repräsentierte Abbildung durch die Bilderfassungseinheit 40 unmittelbar in eine digitale Abbildung umgewandelt werden, ohne als Zwischenschritt eine analoge Abbildung zu erzeugen. Die digitale Abbildung wird anschließend an die Auswerteeinheit 50 übermittelt.

Beispielhaft ist ein Ausschnitt 5 einer durch einen A/D-Wandler 41 generierten Abbildung dargestellt, in welchem eine Vielzahl von Partikeln sichtbar ist. Insbesondere sind dort beispielhaft vier vorbestimmte Partikel 42, 42', 42" dargestellt, welche nur teilweise oder verdeckt sichtbar sind. Diese können auch von anderen Partikeln 43, 44 überlagert werden. Weiter ist die äußere Erscheinung 52 eines vorbestimmten Partikels in der Auswerteeinheit 50 bzw. dessen Datenspeicher 51 als ein Vergleichsbild 6 bzw. als morphologische Eigenschaft der vorbestimmten Partikel hinterlegt. Mithilfe von Bildverarbeitung werden nun die Partikel in dem Ausschnitt 5 der Abbildung mit der äußeren Erscheinung 52 des Zielpartikels bzw. des vorbestimmten Partikels verglichen. Bei ausreichend hoher Übereinstimmung mit dem Vergleichsbild 6 wird der jeweils analysierte Partikel in dem Ausschnitt 5 als vorbestimmter Partikel erkannt und gezählt. Die vorbestimmten Partikel bzw. Viren lassen sich also von anderen Partikeln durch ihre äußere Erscheinung bzw. durch ihre äußere Form unterscheiden. Beispielsweise besitzt der Partikel 43 zwar eine annähernd gleiche Größe, so dass er bei einer Bestimmung anhand der Größe falsch als Virus bzw. vorbestimmter Partikel erkannt werden würde, jedoch eine vollständig abweichende Kontur bzw. Oberflächenform, so dass er mit der vorliegend vorgeschlagenen Vorrichtung korrekt als kein vorbestimmter Partikel bzw. Virus klassifiziert werden kann.

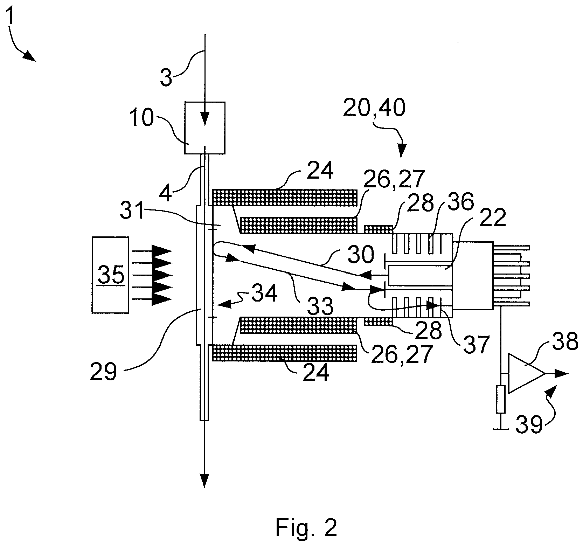

In Figur 2 sind die Abbildungseinheit 20 und die Bilderfassungseinheit 40 integral miteinander ausgebildet, wobei sich Vorrichtung 1 dadurch als eine Integrationen eines Superorthikons und eines REMs ergibt.

Der Grundaufbau der Vorrichtung 1 gemäß Figur 2 entspricht dem eines Superorthikons, also eines Vidicons mit integrierter Auswertung (Photomultiplier, Elektronenvervielfacher) der Sekundärelektronen 33. Die Sekundärelektronen 33 werden dabei gemäß dem Funktionsprinzip eines REM durch den Primärelektronenstrahl 30 erzeugt.

Ausgehend von einem herkömmlichen Superorthikon besitzt die Vorrichtung 1 statt seines Glasfensters mit einer lichtempfindlichen Schicht einen aus Siliziumnitrid (SiN) gebildeten Rasterabschnitt 34. Hierzu ist der Rasterabschnitt 34 als eine SiN-Platte ausgebildet, welche einen oder mehrere Bereiche (10µm x 10µm) aufweist, welche als Fenster bezeichnet werden können. Die SiN-Platte bzw. der Rasterabschnitt 34 ist zumindest im Bereich der Fenster in seiner Dicke so bemessen, dass der Primärelektronenstrahl 30 den Rastabschnitt 34 bis zu der Probe in dem dahinter unmittelbar angrenzenden Probenkanal 29 erreichen und entsprechend abtasten kann. Hierfür ist insbesondere eine Dicke der "Fenster" in einem Bereich zwischen 10 und 30 nm vorteilhaft.

Der weitere Aufbau der Vorrichtung 1 bzw. der Abbildungseinheit 20 wird derart gewählt, dass Auflösungen bei der Bildgebung bis zu 10 nm und mehr möglich sind. Dieser die Auflösung bestimmende Aufbau wird insbesondere auch von der Größe des Rasterabschnitts 34 und den Magneten 26, 27 zur Fokussierung bestimmt.

Um den Primärelektronenstrahl 30 für die Abtastung bzw. für die Vergrößerung der in der Probe enthaltenen Partikel ausreichend fein bereitstellen zu können, kann die Vorrichtung 1 bzw. die Abbildungsvorrichtung 20 weitere Elektronen-Linsen, also weitere für den Primärelektronenstrahl 30 als Linse wirkende Magnete oder Spulen 26, 27 aufweisen.

Um eine Feinjustage zu ermöglichen, weist die vorliegende Vorrichtung zudem Magneten bzw. hier Spulen 28 zur Justage des Primärelektronenstrahls 30 auf. Vorteilhaft ist der Aufbau so gestaltet, dass Anodenspannungen bis 120 kV oder mehr möglich sind.

Der durch den Wehneltzylinder 22 erzeugte Primärelektronenstrahl 30 wird durch die Rastereinheit, welche insbesondere durch die Magnete bzw. Spulen 24 gebildet ist, gemäß einem vorbestimmten Rastermuster abgelenkt und über den Rasterabschnitt 34 geführt. Alternativ zu einer Ablenkung durch Spulen, kann die Rastereinheit ausgebildet sein, den Primärelektronenstrahl 30 elektrostatisch abzulenken. Die dabei erzeugten Sekundärelektronen 33 werden anschließend von den Dynoden 36 als Teil des Photomultipliers und der Signalanode 37 erfasst, welche den Detektor 32 des REM ersetzen bzw. diesen bilden.

Das von der Signalanode 37 erfasste Signal wird anschließend mit dem Signalverstärker 38 verstärkt und als Bildsignal 39 an die in Figur 2 nicht dargestellte Auswerteeinheit 50 weitergeleitet.

Um anhand der erfassten Bilder weiter bestimmen zu können, bei welchen der Partikel in der Abbildung es sich um die vorbestimmten Partikel handelt, weist die Vorrichtung 1 gemäß Figur 2 zudem eine Strahlungsquelle 35 auf, welche eine die vorbestimmten Partikel fragmentierende und somit zerstörende Strahlung erzeugt. Handelt es sich bei den vorbestimmten Partikeln um Viren, erzeugt die Strahlungsquelle 35 UV-Licht, welche die Viren in Schwingung versetzt und dadurch aufbricht, so dass anhand mehrerer hintereinander aufgenommener Abbildungen bestimmt werden kann, welche Partikel zerstört wurden. Bei den zerstörten bzw. fragmentierten Partikeln handelt es sich um die vorbestimmten Partikel, so dass ihre Anzahl in den Abbildungen und ihre Konzentration in der Luft dadurch bestimmbar ist.

## Patentansprüche

1. Vorrichtung (1) zur Erfassung einer Konzentration von vorbestimmten Partikeln, insbesondere Viren, in Luft (3), welche organische und/oder anorganische Aerosolpartikel umfasst,
wobei die Vorrichtung (1) eine Bereitstellungseinheit (10), eine Abbildungseinheit (20), eine Bilderfassungseinheit (40) und eine Auswerteeinheit (50) aufweist,
wobei die Bereitstellungseinheit (10) ausgebildet ist, die in der Luft (3) enthaltenen Aerosolpartikel in einem Fluid (4) zu binden, so dass das Fluid (4) die zuvor in der Luft (3) enthaltenen Aerosolpartikel als Partikel enthält, und einen stetigen oder gleichmäßig getakteten Fluidstrom entlang eines vorbestimmten Strömungspfades bereitzustellen,
wobei die Abbildungseinheit (20) einen Probenkanal (29) aufweist, dessen Innenraum von dem Fluid durchströmbar ist und den vorbestimmten Strömungspfad innerhalb der Abbildungseinheit (20) bestimmt, und wobei die Abbildungseinheit (20) ausgebildet ist, die Partikel in dem Fluid (4) in dem Probenkanal (29) mit einem als Primärelektronenstrahl (30) bezeichneten Elektronenstrahl gerastert abzutasten, durch Interaktion des Elektronenstrahls mit den Partikeln entstehende als Sekundärelektronen (33) bezeichnete Elektronen zu erfassen und durch die erfassten Elektronen eine vergrößerte Abbildung der Partikel zu erzeugen, welche in dem den Probenkanal (29) durchströmenden Fluid (4) enthalten sind,
wobei die Bilderfassungseinheit (40) ausgebildet ist, die Abbildung zu erfassen und an die Auswerteeinheit (50) zu übermitteln,
wobei die Auswerteeinheit (50) ausgebildet ist, automatisch morphologische Eigenschaften der in der Abbildung abgebildeten Partikel zu erfassen, die erfassten morphologischen Eigenschaften mit morphologischen Eigenschaften der vorbestimmten Partikel zu vergleichen und durch den Vergleich einen Anteil und/oder eine Anzahl von vorbestimmten Partikeln in der Abbildung sowie die Konzentration der vorbestimmten Partikel in der Luft (3) zu bestimmen.

2. Vorrichtung nach Anspruch 1,
wobei die Abbildungseinheit (20) eine einen Primärelektronenstrahl (30) erzeugende Primärelektronenquelle (21), eine Vielzahl den Primärelektronenstrahl (30) lenkende und für den Primärelektronenstrahl (30) als Linse wirkende Magnete (26, 27), zumindest eine Rastervorrichtung (24) zur rasternden Ablenkung des Primärelektronenstrahls (30), einen Detektor (32) zur Detektion von Sekundärelektronen und eine Vakuumkammer (31) mit einem darin herrschenden Vakuum aufweist, welche von dem Primärelektronenstrahl (30) durchlaufen wird,
wobei der Probenkanal (29) die Vakuumkammer (31) durchläuft oder an die Vakuumkammer (31) angrenzt und derart in oder an der Vakuumkammer (31) angeordnet ist, dass der Primärelektronenstrahl (30) auf den Probenkanal (29) und das den Probenkanal (29) durchströmende Fluid (4) trifft, so dass Sekundärelektronen (33) erzeugt werden.

3. Vorrichtung nach Anspruch 1 oder 2,
wobei der Probenkanal (29) zumindest abschnittsweise aus Siliziumnitrid, Aluminiumfolie oder einem anderen für den Primärelektronenstrahl (30) und die Sekundärelektronen (33) durchlässigen Material gebildet ist, welches zugleich den Innenraum des Probenkanals (29) gegenüber der Vakuumkammer (31) druckdicht abdichtet.

4. Vorrichtung nach den Ansprüchen 2 und 3,
wobei der Probenkanal (29) auf einer dem Primärelektronenstrahl (30) zugewandten Seite einen Rasterabschnitt (34) aufweist, über welchen der Primärelektronenstrahl (30) gerastert durch die Rastervorrichtung (24) gelenkt wird,
und wobei der Probenkanal (29) in dem Rasterabschnitt (34) aus Siliziumnitrid, Aluminiumfolie oder einem anderen für den Primärelektronenstrahl (30) und die Sekundärelektronen durchlässigen Material gebildet ist, welches zugleich den Innenraum des Probenkanals (29) gegenüber der Vakuumkammer (31) druckdicht abdichtet.

5. Vorrichtdung nach einem der Ansprüche 2 bis 4,
wobei die Magnete (26, 27) als Permanentmagnete ausgebildet oder als Elektromagnete ausgebildet und mit einer konstanten Spannung versorgt sind, so dass der Primärelektronenstrahl (30) von den Magneten (26, 27) in einer einzigen vorbestimmten Weise auf das den Probenkanal (29) durchströmende Fluid (4) fokussiert ist,
und/oder wobei der Probenkanal (29) dauerhaft mit der Vakuumkammer (31) verbunden ist,
und/oder wobei die Vakuumkammer (31) vollständig druckdicht abgeschlossen und ausgebildet ist, ein in ihr herrschendes Vakuum dauerhaft zu erhalten, so dass eine das Vakuum bestimmende Druckminderung nur einmalig durchgeführt werden muss.

6. Vorrichtung nach einem der Ansprüche 2 bis 5,
wobei die Rastervorrichtung (24) ausgebildet ist, den Primärelektronenstrahl (30) elektrostatisch und/oder elektromagnetisch abzulenken.

7. Vorrichtung nach einem der vorhergehenden Ansprüche,
wobei die Bilderfassungseinheit (40) ein A/D-Wandler ist, welcher ausgebildet ist, eine analoge von Sekundärelektronen (33) mittels des Detektors (32) erfasste Abbildung in eine digitale Abbildung zu wandeln.

8. Vorrichtung nach einem der vorhergehenden Ansprüche,
wobei die Bilderfassungseinheit (40) und die Abbildungseinheit (20) integral miteinander ausgebildet sind, so dass die Partikel in dem Probenkanal (29) nach dem Prinzip des Rasterelektronenmikroskops vergrößert und die vergrößerte Abbildung nach dem Prinzip eines Ikonoskops, Orthikons oder Superorthikons erfasst wird.

9. Vorrichtung nach einem der vorhergehenden Ansprüche,
wobei die Auswerteeinheit (50) einen Datenspeicher (51) aufweist, in welchem die morphologischen Eigenschaften und insbesondere ein Aussehen der vorbestimmten Partikel gespeichert sind, und die Auswerteeinheit (50) ausgebildet ist, durch Bildverarbeitung und Objekterkennung zu ermitteln, wie viele der in der Abbildung abgebildeten Partikel morphologische Eigenschaften und insbesondere ein Aussehen entsprechend der morphologischen Eigenschaften und insbesondere dem Aussehen der vorbestimmten Partikel aufweisen und somit vorbestimmte Partikel sind.

10. Vorrichtung nach einem der vorhergehenden Ansprüche,
ferner aufweisend eine Strahlungsquelle (35) zur Zerstörung von Partikeln und insbesondere zur Zerstörung der vorbestimmten Partikel,
wobei die Strahlungsquelle (35) auf den Probenkanal (29) ausgerichtet ist, so dass die Partikel in dem Probenkanal (29) zerstörbar sind.

11. Verfahren zur Erfassung einer Konzentration von vorbestimmten Partikeln, insbesondere Viren, in Luft, welche organische und/oder anorganische Aerosolpartikel umfasst, mit einer Vorrichtung (1) gemäß einem der vorhergehenden Ansprüche,
wobei die in der Luft enthaltenen Aerosolpartikel mit der Bereitstellungseinheit in einem Fluid gebunden werden, so dass das Fluid die zuvor in der Luft enthaltenen Aerosolpartikel als Partikel enthält,
wobei ein stetiger oder gleichmäßig getakteter Fluidstrom entlang eines vorbestimmten Strömungspfades erzeugt wird,
wobei mittels der Abbildungseinheit eine vergrößerte Abbildung der Partikel erzeugt wird, welche in dem den Probenkanal durchströmenden Fluid enthalten sind,
wobei die Abbildung mit der Bilderfassungseinheit erfasst und an die Auswerteeinheit übermittelt wird
wobei die Auswerteeinheit automatisch morphologische Eigenschaften der in der Abbildung abgebildeten Partikel erfasst und die erfassten morphologischen Eigenschaften mit morphologischen Eigenschaften der vorbestimmten Partikel vergleicht,
wobei durch den Vergleich ein Anteil und/oder eine Anzahl von vorbestimmten Partikeln in der Abbildung und die Konzentration der vorbestimmten Partikel in der Luft bestimmt wird.

12. System zur Ermittlung einer Bewegung und Konzentration von vorbestimmten Partikeln in einem Raum umfassend eine zentrale Auswerteeinheit und eine Vielzahl von Vorrichtungen (1) gemäß einem der Ansprüche 1 bis 10,
wobei die Vorrichtungen (1) nach einem vorbestimmten Muster und insbesondere gemäß einem vorbestimmten Raster in dem Raum verteilt sind,
wobei die zentrale Auswerteeinheit ausgebildet ist, aus den von den Vorrichtungen (1) jeweils ermittelten Konzentrationen eine Konzentration der Partikel in dem Raum und/oder eine Verteilung der vorbestimmten Partikel in dem Raum und/oder eine Bewegung der vorbestimmten Partikel in dem Raum zu ermitteln und/oder vorherzusagen.
